# EUROPEAN PATENT APPLICATION

(11) **EP 2 133 798 A1**
(43) Date of publication of application: **16.12.2009**
(21) Application number: 09158606.5
(22) Date of filing: 23.04.2009
(51) Int. Cl.: G06F 13/38, G06F 15/173

(54) **Inter-processor communication system, processor, inter-processor communication method, and communication method**

(30) Priority: 10.06.2008 JP 2008151660
(71) Applicant: NEC CORPORATION, Minato-ku, Tokyo 108-8001 (JP)
(72) Inventor: Kanoh, Yasushi, Tokyo 108-8001 (JP)
(74) Representative: Vossius & Partner

(57) **Abstract**

An inter-processor communication system includes processors and a transfer device that, upon receiving a multicast packet from any of the processors, transfers the packet to processors designated in the packet as destinations among the processors. Each processor includes: a memory unit; a holding unit which holds position information indicating a reference position in the memory unit; a transmitting unit which transmits to the transfer device a multicast packet representing data and an adjustment value indicating an area for writing data that was set for use by its own processor by using the reference position: and a receiving unit which, upon receiving a multicast packet that has been transmitted by way of the transfer device, determines a write position in the memory unit based on the adjustment value in the packet and the position information and stores the data in the packet in that write position.

## Description

This application is based upon and claims the benefit of priority from Japanese patent application No. 2008-151660, filed on June 10, 2008, the disclosure of which is incorporated herein in its entirety by reference.

The present invention relates to an inter-processor communication system, a processor, an inter-processor communication method, and a communication method, and more particularly relates to an inter-processor communication system, a processor, an inter-processor communication method, and a communication method for realizing a lower latency gather process in which each of a plurality of processors collects data from other processors.

MPI (Message Passing Interface) is one of the most frequently used communication libraries when writing a parallel program for use by parallel computers. MPI library includes a function referred to as "MPI_Allgather()." MPI_Allgather() collects data from a plurality of processors and distributes the gathered data to all of a plurality of processors.

Non-Patent Document 1 ("Improving the Performance of Collective Operations in MPICH" by Rajeev Thakur and William Gropp, Euro PVM/MPI 2003, 2003) introduces an algorithm called "Recursive Doubling" as a communication method of MPI_Allgather() of MPI library.

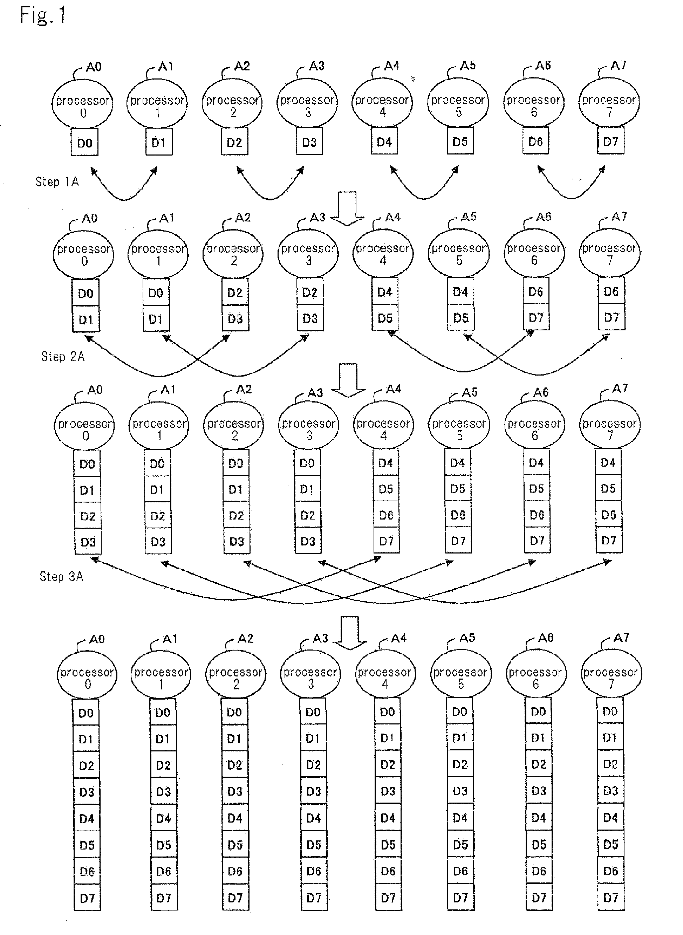

FIG. 1 is an explanatory view for explaining Recursive Doubling.

An operation is here described in which each of processors A0-A7 uses MPI_Allgather() to gather data D0-D7.

Processor number "0" is given to processor A0. Processor number "1" is given to processor A1. Processor number "2" is given to processor A2. Processor number "3" is given to processor A3. Processor number "4" is given to processor A4. Processor number "5" is given to processor A5. Processor number "6" is given to processor A6. Processor number "7" is given to processor A7.

Each processor number is assumed to be represented by a three-bit binary number.

In Step 1A, the data, which are stored in each processor, are communicated between the two processors that are given processor numbers that have the same value when the first bit from the bottom of the three-bit binary numbers, which indicate the processor numbers, is set to "don't care." In other words, each of the processors of processors A0 and A1, of processors A2 and A3, of processors A4 and A5, and of processors A6 and A7 sends the data in itself to its partner.

Upon completion of Step 1A, processors A0 and A1 store data D0 and D1, processors A2 and A3 store data D2 and D3, processors A4 and A5 store data D4 and D5, and processors A6 and A7 store data D6 and D7.

In Step 2A, the data, which are stored in each processor, are communicated between two processors that are given processor numbers of the same value when the second bit from the bottom of the three-bit binary number, which indicates the processor number, is set to "don't care." In other words, each processor of processors A0 and A2, of processors A1 and A3, of processors A4 and A6, and of processors A5 and A7 sends the data in itself to its partner.

Upon completion of Step 2A, processors A0-A3 store data D0-D3, and processors A4-A7 store data D4-D7.

In Step 3A, the data, which are stored in each processor, are communicated between the two processors that are given processor numbers of the same value when the third bit from the bottom of the three-bit binary number, which indicates the processor numbers, is set to "don't care." In other words, each processor of processors A0 and A4, of processors A1 and A5, of processors A2 and A6, and of processors A3 and A7 sends the data in itself to its partner.

Upon completion of Step 3A, processors A0-A7 store data D0-D7 and MPI_Allgather() is completed.

If the number of processors is P and the size of data (the data size) collected from each processor is N bytes, communication in Recursive Doubling is implemented logP times in logP steps, each processor transmits data of N(P-1) bytes and receives data of N(P-1) bytes by all of the steps.

If the latency involved in one communication is α and the time (throughput) taken up in the communication of one byte is β, the communication time in Recursive Doubling can be represented by: logP × α + N(P-1) × β.

In Patent Document 1 (JP-A-09-297746), a technique is disclosed for, in a parallel computer system that includes a network having a multicast function for copying a packet transmitted from one processor and transmitting to other processors, enabling the use of the multicast function of the network even when addresses for writing data differ for each destination multicast processor.

In Patent Document 1, a technique is disclosed in which the receiving device in each processor has an address register in which an address for writing data can be set for each destination processor, and in which an address for writing data used for writing received data is set in advance in the address register.

In the Recursive Doubling disclosed in Non-Patent Document 1, if the number of processors is P, communication must be carried out logP times in logP Steps.

An increase in the scale of parallel computers results in an increase of the distance between processors, whereby the latency involved in one instance of communication also increases. The throughput of networks increases with each year as new technology is introduced. Nevertheless, the latency of communication increases depending on the increase in the scale of parallel computers, and as a result, improvement of latency in communication is problematic.

In addition, when the number of processors that participate in a gather process is not a power of 2 in Recursive Doubling, the number of communications exceeds logP, thereby lengthening the time involved in the gather process. When the data size that is gathered differs for each processor as in MPI_Allgatherv(), the amount of data that is communicated in one step differs for each processor. As a result, the time taken for one step becomes lengthy.

In the multicast method disclosed in Patent Document 1, the values of the address register are updated in which each write the data of a received packet to memory. As a result, when a multicast packet that uses the same address register are transmitted from a plurality of processors at the same time, the order of the packets that are received may differ for each processor. The data that are gathered (collected) may therefore be written to different addresses for each processor.

Accordingly, when the multicast method disclosed in Patent Document 1 is used, different address registers must be provided for each transmission processor, and the address to which data are written from each processor must be set using values in the address register corresponding to the processor that is the transmission source.

However, when the number of processors that participate in the gather process becomes numerous, incorporating address registers for this number of processors in the receiving device becomes difficult.

In addition, an increase in the number of address registers that are used results in a corresponding increase in the number of bits for designating the address register that are recorded in the header of a multicast packet. As a result, the packet header becomes larger, the proportion of the packet occupied by the header increases, and the proportion of the packet occupied by data decreases.

In addition, addresses for writing data are set in address registers before carrying out a gather process, and as a result, an increase in the number of address registers that are used results in an increase in the number of times that addresses for writing data are set, and the time for processing, which is carried out before implementing the gather process, increases, and overhead increases.

An exemplary object of the present invention is to provide an inter-processor communication system, a processor, an inter-processor communication method, and a communication method that can solve the above-described problems.

An inter-processor communication system according to an exemplary aspect of the invention includes a plurality of processors and a transfer device that, upon receiving a multicast packet from any of the plurality of processors, transfers the multicast packet to a plurality of processors that are designated as the destinations in the multicast packet among the plurality of processors,
wherein the plurality of processors each includes:
a memory unit;
a holding unit which holds position information that indicates a reference write position in the memory unit;
a transmitting unit which transmits to the transfer device multicast packets in which are recorded data and an adjustment value that indicates an area for writing data that has been set in advance for use by its own processor by using the reference write position as a reference; and
a receiving unit which, upon receiving the multicast packet that has been transmitted by way of the transfer device, determines a write position in the memory unit based on the adjustment value recorded in the multicast packet and the position information in the holding unit and stores data recorded in the multicast packet at that write position.

A processor, which is connected together with other processors to a transfer device including a multicast function for transmitting a multicast packet that has been received to a plurality of transmission destinations, according to an exemplary aspect of the invention includes:
a memory unit;
a holding unit which holds position information indicating a reference write position in the memory unit;
a transmitting unit which transmits to the transfer device a multicast packet in which are recorded data and an adjustment value indicating an area for writing data that has been set in advance for use by its own processor by using the reference write position as a reference;
a receiving unit which, upon receiving the multicast packet that has been transmitted by way of the transfer device, determines a write position in the memory unit based on the adjustment value recorded in the multicast packet and the position information in the holding unit and stores data that are recorded in the multicast packet in the write position.

An inter-processor communication method, which is carried out by a inter-processor communication system that includes a plurality of processors each separately including a holding unit which holds position information indicating a reference write position in a memory unit in its own processor and a transfer device that is connected to the plurality of processors, according to an exemplary aspect of the invention includes:
transmitting from any one processor among the plurality of processors to the transfer device a multicast packet in which are recorded data and an adjustment value indicating an area for writing data that was set in advance for use by its own processor by using the reference write position as a reference;
upon receiving the multicast packet by the transfer device, transferring the multicast packet from the transfer device to a plurality of processors that are designated as destinations in the multicast packet among the plurality of processors; and
upon receiving the multicast packet by each of the plurality of processors that are designated as destinations in the multicast packet, determining a write position in the memory unit based on the adjustment value that is recorded in the multicast packet and the position information in the holding unit in its own processor and storing data that are recorded in the multicast packet in the write position by each of the plurality of processors that are designated as destinations in the multicast packet.

A communication method, which is carried out by a processor that is connected together with other processors to a transfer device including a multicast function for transmitting a multicast packet that has been received to a plurality of transmission destinations, according to an exemplary aspect of the invention includes:
holding in a holding unit position information that indicates a reference write position in a memory unit;
transmitting to the transfer device a multicast packet in which are recorded data and an adjustment value that indicates an area for writing data that has been set in advance for use by its own processor by using the reference write position as a reference; and
upon receiving the multicast packet that has been transmitted by way of the transfer device, determining a write position in the memory unit based on the adjustment value that is recorded in the multicast packet and the position information in the holding unit and storing data that are recorded in the multicast packet in that write position.

The above and other objects, features, and advantages of the present invention will become apparent from the following description with reference to the accompanying drawings which illustrate an example of the present invention.
FiG. 1 is for explaining a gather process that uses Recursive Doubling;
FIG. 2 is a block diagram showing the inter-processor communication system of the first exemplary embodiment of the present invention;
FIG. 3 is an explanatory view showing an example of a packet format used in the first exemplary embodiment;
FIG. 4A shows a gather process that uses the parallel computers of the first exemplary embodiment of the present invention;
FIG. 4B shows a gather process that uses the parallel computers of the first exemplary embodiment of the present invention;
FIG. 4C shows a gather process that uses the parallel computers of the first exemplary embodiment of the present invention;
FIG. 4D shows a gather process that uses the parallel computers of the first exemplary embodiment of the present invention;
FIG. 4E shows a gather process that uses the parallel computers of the first exemplary embodiment of the present invention;
FIG. 5 is a block diagram showing the processor of parallel computers of the second exemplary embodiment of the present invention;
FIG. 6 is an explanatory view showing an example of address register table 160;
FIG. 7 is an explanatory view showing an example of a packet format used in the second exemplary embodiment;
FIG. 8 is a block diagram showing a processor of parallel computers of the third exemplary embodiment of the present invention;
FIG. 9 is an explanatory view showing an example of address register table 160;
FIG. 10 is an explanatory view showing an example of the packet format used in the second exemplary embodiment; and
FIG. 11 is an explanatory view for explaining the gather process of each exemplary embodiment.

### Detailed Description of the Exemplary Embodiments:

Explanation next regards the details of the exemplary embodiments of the present invention with reference to the accompanying drawings.

### First Exemplary Embodiment

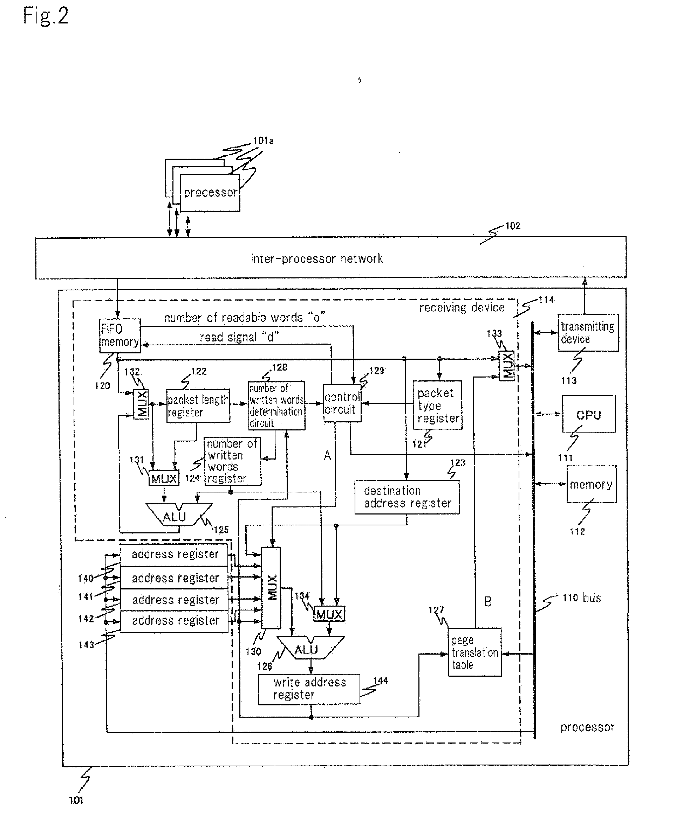

FIG. 2 is a block diagram showing the inter-processor communication system of a first exemplary embodiment of the present invention.

In FIG. 2, the inter-processor communication system includes processor 101, a plurality of processors 101a-101a, and inter-processor network 102.

Processor 101 and the plurality of processors 101a-101a are connected by way of inter-processor network 102 that has a multicast function. Processor 101 and the plurality of processors 101a-101a are assumed to participate in a gather process. Processor 101 and processor 101a have the same configuration.

Inter-processor network 102 can typically be referred to as a transfer device.

Inter-processor network 102, upon receiving a multicast packet from any of processor 101 and processors 101a-101a, transmits the multicast packet to the processors among processor 101 and processors 101a-101a that are designated as the destinations of the multicast packet.

Inter-processor network 102, upon receiving a multicast packet from anyone of processor 101 and processors 101a-101a, may also transmit the multicast packet to all of processor 101 and processors 101a-101a.

Processor 101 includes CPU (Central Processing Unit) 111, memory 112, transmitting device 113, receiving device 114, and address registers 140-143. Address registers 140-143 may be included in receiving device 114. CPU 111, memory 112, transmitting device 113, receiving device 114, and address registers 140-143 are connected to each other by way of bus 110. Receiving device 114 and address registers 140-143 are directly connected.

Receiving device 114 includes: FIFO (First-In First-Out) memory 120, packet type register 121, packet length register 122, destination address register 123, number of written words register 124, write address register 144, ALUs (Arithmetic and Logic Units) 125 and 126, page translation table 127, number of written words determination circuit 128, control circuit 129, and MUX (multiplexers) 130-134.

CPU 111 can also be typically referred to as control means.

CPU 111 controls processor 101 by, for example, reading a program that prescribes the operations of processor 101 from a disk (a recording medium that can be read by a computer) and executing the program.

Memory 112 can also typically be referred to as memory means.

Memory 112 stores data that have been collected from each processor that participates in a gather process.

Any of address registers 140-143 can also be typically referred to as holding means. In the present exemplary embodiment, an example is described in which the number of address registers is four, but the number of address registers may be any number.

Each of address registers 140-143 holds reference addresses indicating reference write positions in memory 112. A reference address can typically be referred to as position information indicating a reference write position in memory 112.

Reference addresses that have been set by a process on the reception side executed by CPU 111 are stored in address registers 140-143. In other words, CPU 111 sets reference addresses in advance in address registers 140-143.

In each processor in the present exemplary embodiment, address register 142 is used as holding means (multicast holding unit) that is placed in correspondence in advance with a multicast packet. The multicast holding unit is not limited to address register 142 and may be address register 140, 141, or 143.

Address register number "0" is given to address register 140, address register number "1" is given to address register 141, address register number "2" is given to address register 142, and address register number "3" is given to address register 143.

Transmitting device 113 can also be typically referred to as transmitting means.

Transmitting device 113 transmits a multicast packet in which an adjustment value and data are recorded to inter-processor network 102. The adjustment value represents an area for writing data in memory 112 that has been set in advance for the use of that processor with the reference address as a reference. The adjustment value is hereinbelow referred to as "offset."

The data that are recorded in the multicast packets are data for storage in all processors that participate in the gather process.

For example, transmitting device 113 transmits to inter-processor network 102 a multicast packet in which are recorded designation information for designating an address register that is used as the multicast holding units, data, and offset.

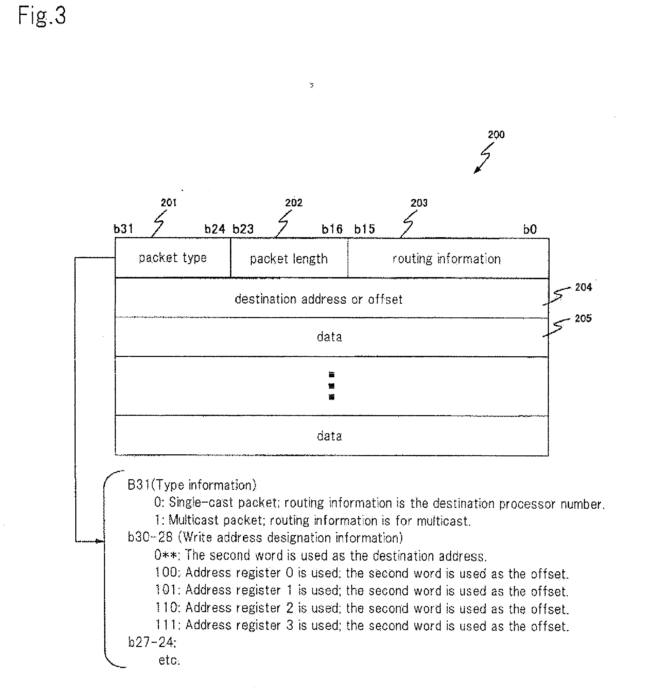

FIG. 3 is an explanatory view showing an example of the format of a packet that transmitting device 113 transmits.

Packet 200 shown in FIG. 3 can be used as a multicast packet, and can also be used as a single-cast packet. The first word and second word of packet 200 are used as a packet header.

In FIG. 3, packet type 201, packet length 202, and routing information 203 are recorded in the first word of packet 200. In the second word of packet 200, the destination address of a single-cast packet is recorded when packet 200 is a single-cast packet, and the offset is recorded when packet 200 is a multicast packet. Data are recorded in the third and succeeding words of packet 200.

Packet type 201 indicates one bit of type information, three bits of address for writing data designation information, and four bits of other information. The address for writing data designation information can also be typically referred to as designation information.

The one bit of type information indicates whether packet 200 is a single-cast packet or a multicast packet. Interpretation of routing information 203 differs depending on the information shown by the one bit of type information.

The three bits of address for writing data designation information indicate that the information of the second word of packet 200 is the destination address of a single-cast packet or both designate the address register among address registers 140-143 that is the multicast holding unit and indicate that the information of the second word of packet 200 is the offset.

Packet length 202 indicates the number of bytes of data from the third word of packet 200.

Routing information 203 indicates the destination processor number when packet 200 is a single-cast packet and indicates routing information for multicast (for example, a plurality of destination processor numbers) when packet 200 is a multicast packet.

Returning to FIG. 2, upon receiving packet 200 from transmitting device 113, inter-processor network 102 refers to routing information 203 of packet 200.

When packet 200 is a single-cast packet, inter-processor network 102 transmits packet 200 to one processor in accordance with routing information 203.

On the other hand, when packet 200 is a multicast packet, inter-processor network 102 copies packet 200 and transmits packet 200 to a plurality of processors in accordance with routing information 203.

Receiving device 114 can be typically referred to as receiving means.

Upon receiving by way of inter-processor network 102 packet 200 that is a multicast packet transmitted from a processor other than its own processor or packet 200 that is a multicast packet transmitted from its own processor, receiving device 114 determines the address for writing data that indicates the write position in memory 112 based on the offset recorded in packet 200 and the reference address in address register 142 that is the multicast holding unit.

For example, when receiving device 114 receives packet 200 that is a multicast packet, receiving device 114 determines the address for writing data based on the offset that is recorded in packet 200 and the reference address that is held in the address register that is indicated by packet type 201.

In the present exemplary embodiment, receiving device 114 determines the address for writing data by adding the offset that is recorded in packet 200 to the reference address held in the address register that is indicated in packet type 201 (address register 142).

Receiving device 114 stores data that are recorded in packet 200 to this address for writing data.

FIFO memory 120 receives and stores packet 200 from inter-processor network 102.

Packet type register 121 stores packet type 201 that is recorded in packet 200.

Packet length register 122 stores packet length 202 that is recorded in packet 200.

Destination address register 123 stores the destination address or offset that is recorded in the second word of packet 200.

Write address register 144 stores the address for writing data in memory 112.

The address for writing data is determined based on packet type 201 in packet type register 121. In the present exemplary embodiment, control circuit 129 first sets address selection signal "A" based on packet type 201. Control circuit 129 next uses address selection signal "A" to control MUX 130 and ALU 126 to determine the address for writing data. This address for writing data is set in write address register 144.

Number of written words determination circuit 128 determines the number of words of the data that are written to memory 112 based on, for example, the value in write address register 144 (the address for writing data) and the value in packet length register 122 (packet length 202).

Number of written words register 124 stores the number of written words that have been determined by number of written words determination circuit 128.

ALU 125 calculates the remaining packet length based on the value in number of written words register 124 (the number of written words) and the value in packet length register 122 (packet length 202).

ALU 126 is controlled by control circuit 129 and calculates the next address for writing data based on the value in destination address register 123 (destination address), based on the value in destination address register 123 (offset) and the value in any of address registers 140-143 (reference address), or based on the value in write address register 144 (the address for writing data) and the value in number of written words register 124 (the number of written words).

Page translation table 127 is controlled by control circuit 129 and translates the address for writing data, which is a logical address, to physical address "B" and supplies physical address "B" to bus 110 by way of MUX 133.

Control circuit 129 controls receiving device 114. For example, control circuit 129, based on the value in packet type register 121 (packet type 201) and information from number of written words determination circuit 128 (number of written words), reads data (main part) in packet 200 that has arrived from FIFO memory 120 and controls the process of writing these data to memory 112.

MUX 130-134 are controlled by control signals from control circuit 129.

An outline of the operations is next described.

In the present exemplary embodiment, a gather process is carried out by multicast that takes the plurality of processors that participate in the gather process as destinations.

A plurality of address registers 140-143 is provided in each processor. Address registers 140-143 are used for storing the start address of areas in which the data in the received multicast packets are written. The start address of an area in which data are written can also typically be referred to as a reference address.

Each processor that participates in the gather process first sets the start address of the area that is to store the gather results in the address register (multicast holding unit) that is used in the gather process. The area in which gather results are to be stored, i.e., the area for writing data in memory 112 that is set in advance for its own processor is set in advance to differ for each processor.

Each transmitting device 113 then records the address register number and offset in the multicast packet, and with all processors that participate in the gather process as destinations, uses the multicast packet to transmit the data that are scheduled for sending from its own processor. The address register number is used for specifying the address register that is used in the gather process. The offset indicates the distance between the start address and the storage position (write position) of data that are scheduled for sending from its own processor.

The multicast packet is copied in inter-processor network 102 and transmitted to all processors that participate in the gather process.

Multicast packets from all processors that participated in the gather process arrive in each processor.

Receiving device 114 of each processor reads, from address register 142 that was designated in the multicast packet, the start address of the area in memory 112 in which the data in the multicast packet are to be stored and adds the offset recorded in the multicast packet to this start address to calculate the address for writing data in the multicast packet.

Receiving device 114 then writes the data in the multicast packet to this address for writing data.

Receiving device 114 carries out the same process for all multicast packets. The gather process is completed upon reception of all multicast packets in all processors that participate in the gather process.

The details of the packet reception process of the first exemplary embodiment are next described with reference to FIG. 2.

When packet 200 arrives at processor 101 from processor 101a by way of inter-processor network 102, packet 200 is stored in FIFO memory 120 of receiving device 114.

The arrival of packet 200 is reported to control circuit 129 using number of readable words "c" from FIFO memory 120.

Upon receiving number of readable words "c", control circuit 129 first uses read signal "d" to read the header portion of packet 200 from FIFE memory 120 and then writes packet type 201 to packet type register 121, packet length 202 to packet length register 122, and destination address or offset 205 to destination address register 123.

Control circuit 129 next reads packet type 201 from packet type register 121.

When the type information in packet type 201 indicates a single-cast packet, control circuit 129 uses signal "A" to cause MUX 130 to output the value in destination address register 123 (destination address) and causes ALU 126 to execute the process of writing the output from MUX 130 to write address register 144.

As a result, when the type information in packet type 201 indicates a single-cast packet, the value in destination address register 123 (destination address) is written to write address register 144 as the address for writing data.

On the other hand, when the type information in packet type 201 indicates a multicast packet, control circuit 129 first uses signal "A" to cause MUX 130 to output the value (start address) of address register 142 that was designated by the address for writing data designation information in packet type 201, and further, to control MUX 134 to supply the value (offset) of destination address register 123 from MUX 134.

Control circuit 129 next causes ALU 126 to add the start address from MUX 130 and the offset from MUX 134 and to execute a process of writing the result of this addition to write address register 144 as the address for writing data.

As a result, when the type information in packet type 201 indicates a multicast packet, a value obtained by adding the value in address register 142 (start address) and the value in destination address register 123 (offset) is written to write address register 144 as the address for writing data.

Number of written words determination circuit 128 determines the number of written words in accordance with a write request to memory 112 based on the address for writing data set in write address register 144 and the data length in packet length register 122.

For example, when there is cache memory in CPU 111, data writing to an entire cache line can be processed at a faster speed than data writing to one portion of a cache line. As a result, when the address for writing data set in write address register 144 is not a cache line boundary, number of written words determination circuit 128 first carries out writing as far as the cache line boundary, and then determines the number of written words such that writing is to the entire cache line.

Number of written words determination circuit 128 reports to control circuit 129 the number of written words that was determined. In addition, the determined number of written words is further set in number of written words register 124.

Upon receiving the number of written words, control circuit 129 uses page translation table 127 to translate the address for writing data that was set in write address register 144 from a logic address to physical address "B", and then reads the data of the portion of the number of written words from FIFO memory 120 and sends physical address "B" and the data to bus 110 by way of MUX 183 as a memory write request.

By means of this memory write request, the data are stored in the address for writing data in memory 112.

With the completion of the transmission of the memory write request, control circuit 129 uses the number of written words in number of written words register 124 and ALU 125 to update the value (packet length) of packet length register 122 (subtracts the portion of the number of written words).

In the present exemplary embodiment, with the completion of the transmission of the memory write request, control circuit 129 causes MUX 131 to supply the value (packet length) of packet length register 122 and causes ALU 125 to execute the process of subtracting the value in number of written words register 124 (number of written words) from the output (packet length) from MUX 131.

Control circuit 129 then causes MUX 132 to write the output (subtraction result) of ALU 125 to packet length register 122.

As a result, the remaining data length is stored in packet length register 122.

In addition, with the completion of the transmission of the memory write request, control circuit 129 uses the number of written words in number of written words register 124 and ALU 126 to update the value in write address register 144 (adds the portion of the number of written words).

In the present exemplary embodiment, with the completion of the transmission of the memory write request, control circuit 129 causes MUX 130 to supply the value (address for writing data) in write address register 144 and causes MUX 134 to supply the value in number of written words register 124 (number of written Words).

Control circuit 129 next causes ALU 126 to execute a process of adding the output (address for writing data) from MUX 130 and the output (number of written words) from MUX 134 and then execute a process of writing the addition result to write address register 144.

Control circuit 129 then causes number of written words determination circuit 128 to execute a process of using the value in packet length register 122 that was updated and the value in write address register 144 to determine the number of written words in memory 112.

Control circuit 129 repeats the above-described process until the value in packet length register 122 reaches "0" and writes in memory 112 all data that have been sent in by the packet and that are in FIFO memory 120, whereby the process for one packet is completed.

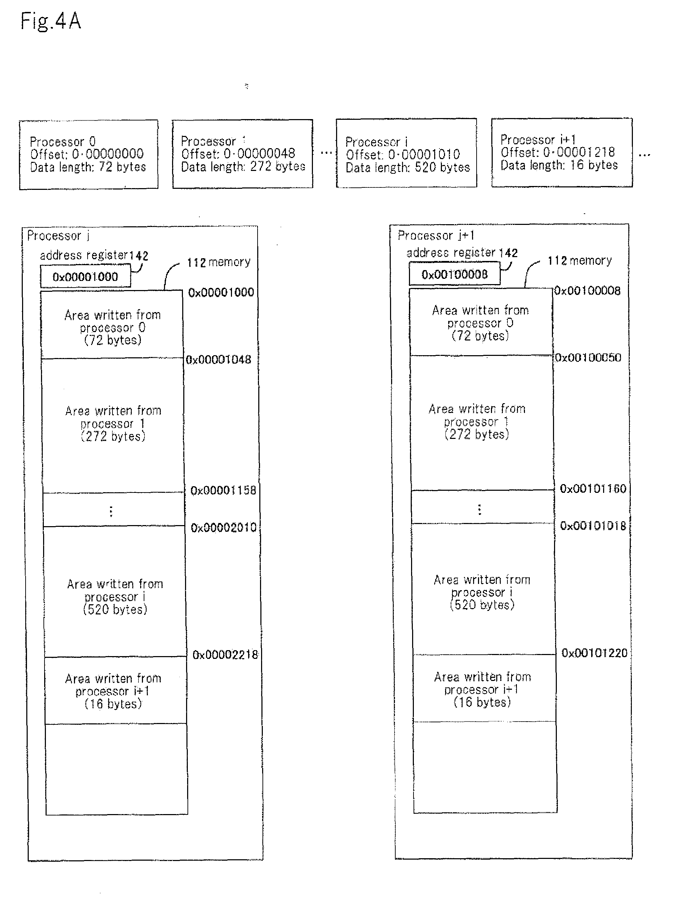

A gather process that uses the first exemplary embodiment is next explained with reference to FIGs. 4A-4E.

For the purpose of explanation, only multicast packets that are transmitted from the four processors processor 0, processor 1, processor i, and processor i+1 are shown in this case. In addition, only a case is shown in which these packets are received in the two processors processor j and processor j+1.

In actuality, however, in the gather process that uses multicast of the present exemplary embodiment, multicast packets are transmitted from all processors that participate in the gather process and the multicast packets arrive in all processors that participate in the gather process.

Processor 0, processor 1, processor i, processor i+1, processor j, and processor j+1 have the same configuration as processor 10 1.

FIG. 4A is an explanatory view showing the state before implementing a gather process.

In the example of the gather process shown in FIGs. 4A-4E, address register 142 is used as the holding unit for multicast, and the start address of the address for writing data is therefore set in address register 142 in processing on each processor.

In processor j, 0x00001000 is set in address register 142. In processor j+1, 0x00100008 is set in address register 142.

The image of memory 112 of processor j and processor j+1 is written, but the memory space of a logical address is shown in the figure as the image of memory 112.

In addition, the offset to the address for writing data is set based on the start address of the gather area and the data size that is sent by processor 0, processor 1, processor i, and processor i+1.

Although this example shows a case of the MPI_Allgatherv() process in which the data size that each processor transmits differs, MPI_Allgather() is a case in which the transmission data sizes of MPI_Allgatherv() are all identical.

In the case of MPI_Allgatherv(), a list of the data size from each processor is transferred to each processor as an argument, whereby each processor is able to determine the data length and offset of data that are transmitted.

In the case of MPI_Allgather(), on the other hand, each processor knows the data size that is collected from each processor and its own ordinal number. As a result, each processor can determine the offset of the transmission data.

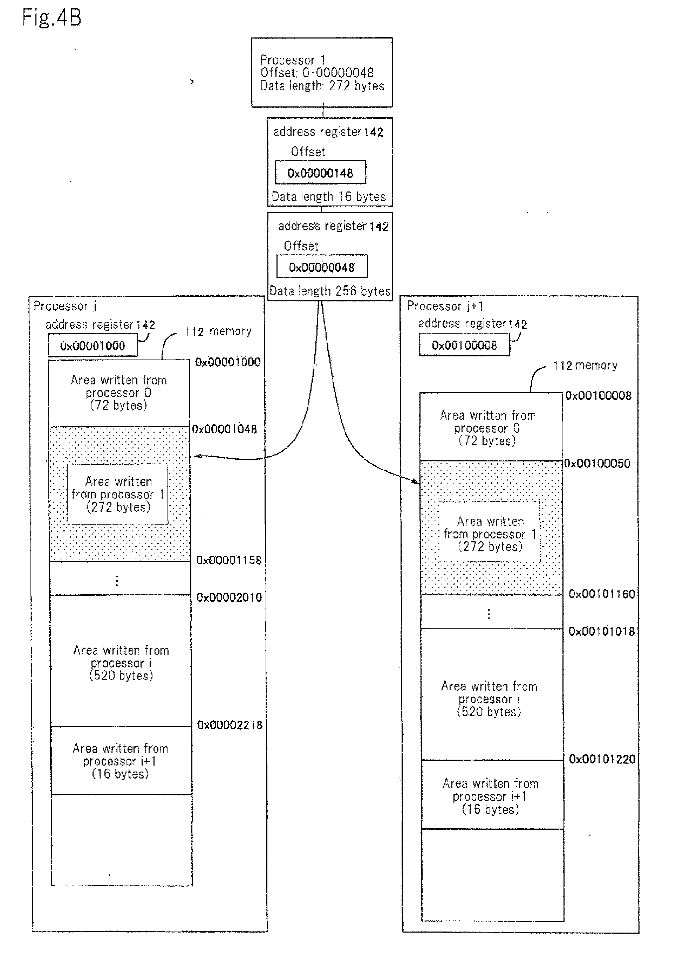

FIG. 4B is an explanatory view showing the point at which a multicast packet from processor 1 arrives at processor j and processor j+1 and is written to each memory 112.

The offset of processor 1 is 0x00000048 and the data length is 272 bytes, and a multicast packet having an offset of 0x00000048 and a data length of 256 bytes is therefore transmitted from processor 1.

A multicast packet having an offset of 0x00000148 and a data length of 16 bytes is next transmitted from processor 1.

The use of address register 142 is designated in both packets.

In processor j, data of 256 bytes are written from 0x00001048, which was obtained by adding 0x00001000, which is the value in address register 142, and offset 0x00000048 that was appended to the first packet, following which data of 16 bytes are written from 0x00001148, which was obtained by adding 0x00001000 and the offset 0x00000148 that was appended to the second packet.

In processor j+1, 256 bytes of data are written from 0x00100050, which was obtained by adding 0x00100008, which is the value in address register 142, and offset 0x00000048 that was appended to the first packet, following which 16 bytes of data are written from 0x00100150, which was obtained by adding 0x00100008 and the offset 0x00000148 that was appended to the second packet.

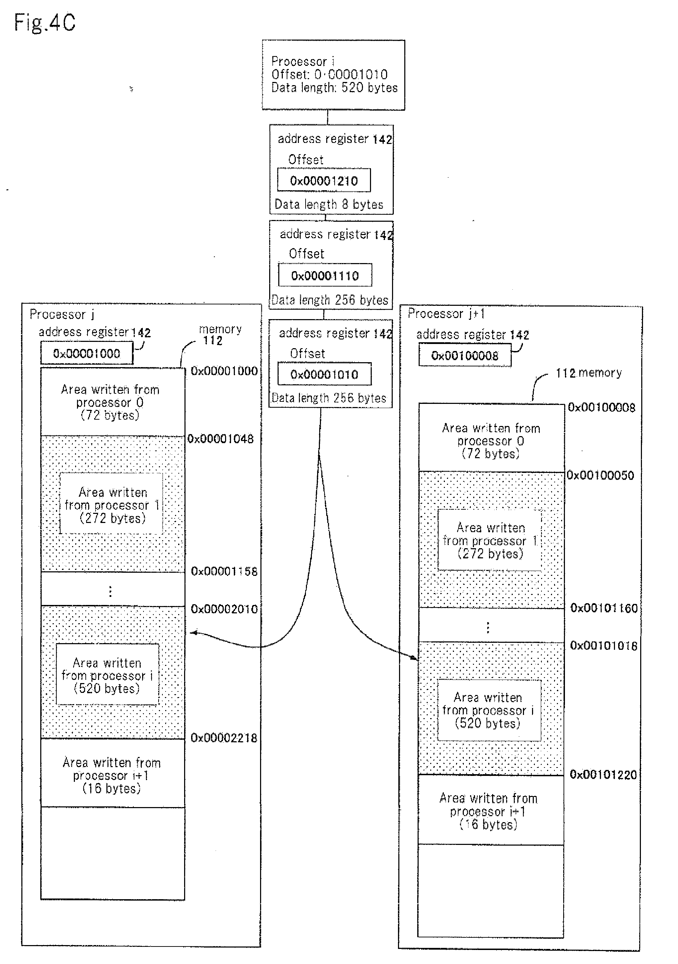

FIG. 4C is an explanatory view showing the point at which a multicast packet from processor i arrives at processor j and processor j+1 and is written to each memory 112.

The offset of processor i is 0x00001010 and the data length is 520 bytes, and a multicast packet having offset of 0x00001010 and data length of 256 bytes is therefore transmitted from processor i.

A multicast packet having an offset of 0x00001110 and a data length of 256 bytes is next transmitted from processor i.

A multicast packet having an offset of 0x00001210 and a data length of 8 bytes is further transmitted from processor i.

The use of address register 142 is designated in all of these packets.

In processor j, 256 bytes of data are written from 0x00002010, which was obtained by adding 0x00001000, which is the value in address register 142, to offset 0x00001010 that was appended to the first packet, following which 256 bytes of data are written from 0x00002110, which was obtained by adding 0x00001000 to the offset 0x00001110 that was appended to the second packet, following which 8 bytes of data are written from 0x00002210, which was obtained by adding 0x00001000 to the offset 0x00001210 that was appended to the third packet.

In processor j+1, 256 bytes of data are written from 0x00101018, which was obtained by adding 0x00100008, which is the value in address register 142, to offset 0x00001010 that was appended to the first packet, following which 256 bytes of data are written from 0x00101118, which was obtained by adding 0x00100008 to the offset 0x00001110 that was appended to the second packet, following which 8 bytes of data are written from 0x00101218, which was obtained by adding 0x00100008 to the offset 0x00001210 that was appended to the third packet.

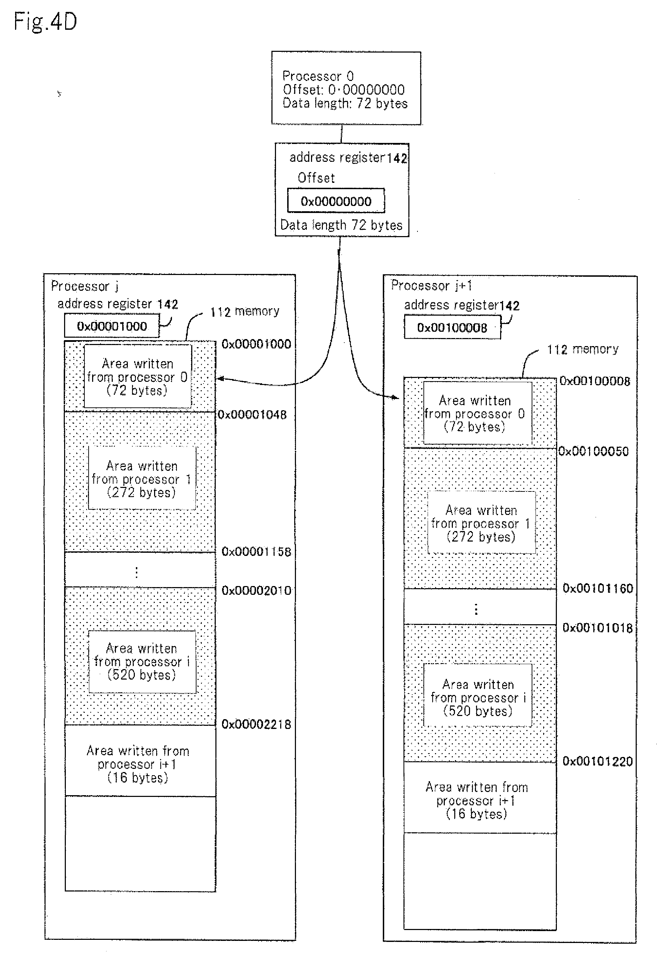

FIG. 4D is an explanatory view showing the point at which a multicast packet from processor 0 arrives at processor j and processor j+1 and is written to each memory 112.

The offset of processor 0 is 0x00000000 and the data length is 72 bytes, whereby a multicast packet having offset 0x00000000 and a data length of 72 bytes is transmitted from processor 0.

In this case as well, the use of address register 142 is designated in the packets.

In processor j, 72 bytes of data are written from 0x00001000, which was obtained by adding 0x00001000, which is the value in address register 142, to the offset 0x00000000 that was appended to the packet.

In processor j+1, 72 bytes of data are written from 0x00100008, which is obtained by adding 0x00100008, which is the value in address register 142, to the offset 0x00000000 that was appended to the packet.

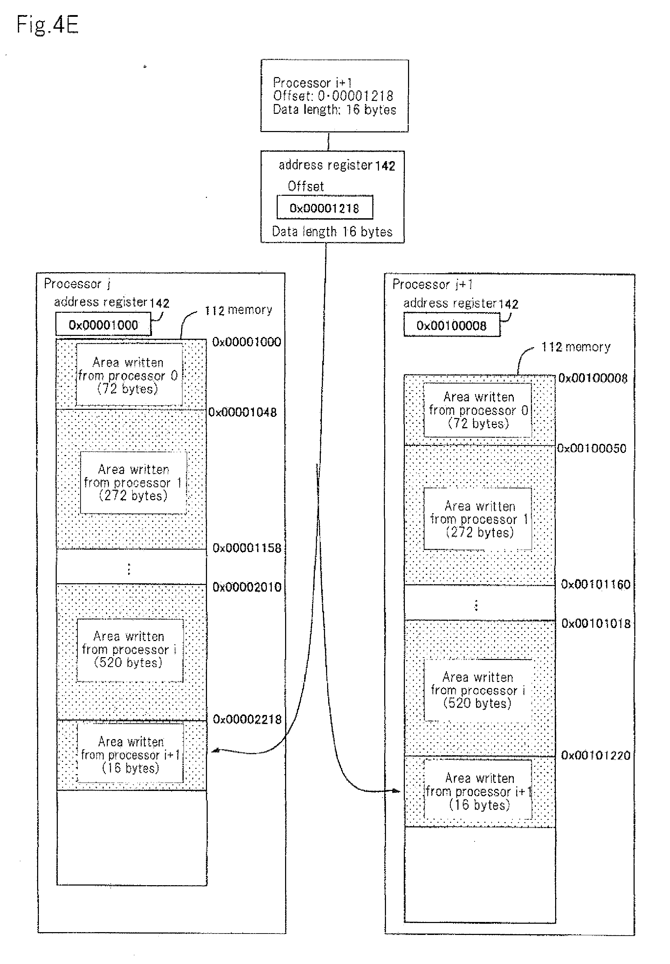

FIG. 4E is an explanatory view showing the point at which a multicast packet from processor i+1 arrives at processor j and processor j+1 and is written to each memory 112.

The offset of processor i+1 is 0x00001218 and its data length is 16 bytes, whereby a multicast packet having an offset of 0x00001218 and a data length of 16 bytes is transmitted from processor i+1.

In this case as well, the use of address register 142 is designated in the packets.

In processor j, 16 bytes of data are written from 0x00002218, which is obtained by adding 0x00001000, which is the value in address register 142, to offset 0x00001218 that was appended to the packet.

In processor j+1, 16 bytes of data are written from 0x00101220, which is obtained by adding 0x00100008, which is the value in address register 142, to the offset 0x00001218 that was appended to the packet.

In the explanation of FIGs. 4A-4E, a case is shown in which multicast packets that were each transmitted from one processor arrive at both processor j and processor j+1. In actuality, however, the order of arrival of multicast packets may differ according to the receiving processor due to the configuration of the network. The effect of the present exemplary embodiment remains unchanged even when the order of arrival of multicast packets differs.

According to the present exemplary embodiment, when receiving device 114 receives a multicast packet by way of inter-processor network 102, the write position in memory 112 is determined based on the offset that is recorded in this multicast packet and the start address in address register 142, and the data that are recorded in the multicast packet are stored at that write position.

As a result, the following effects are exhibited.

As the first effect, the number transmissions of the gather process carried out by each process can be made just one, whereby a reduction of the proportion of the processing time of the gather process that is taken up by network latency is achieved. For example, the influence resulting from an increase of latency of communication caused by the larger scale of parallel computers can be reduced in a gather process.

As the second effect, the gather communication time is not lengthened even when the number of processors that participate in a gather process is not a power of 2, or even when the data size that is gathered differs for each processor.

As the third effect, when a gather process is carried out by using multicast that uses address registers, the number of address registers used in gathering can be reduced. For example, the address registers that are used in gathering can be made just one regardless of the number of participating processors.

As a result, the number of address registers that are built into a receiving device can be reduced. In addition, the reduction in the number of bits for designating address registers in a multicast packet enables a smaller packet header. Still further, because only one address register is set in advance in a receiving-side processor, the setting time can be shortened and the overhead of the gather process can be limited.

In the present exemplary embodiment, the data that are recorded in a multicast packet are data for storage in all of a plurality of processors.

In such a case, the gather process can be carried out in a shorter time when the data used in the gather process are used as these data.

Upon receiving a multicast packet by way of inter-processor network 102 in the present exemplary embodiment, receiving device 114 determines the write position in memory 112 based on the offset recorded in this multicast packet and the start address in the address register that is designated by the designation information recorded in this multicast packet and stores the data recorded in the multicast packet at that write position.

In this case, data can be collected by designating the address register used in collection of the data used in multicast.

In the present exemplary embodiment, CPU 111 sets the start address in the address register used in the data collection in advance. As a result, setting of the start address can be carried out automatically.

### Second Exemplary Embodiment

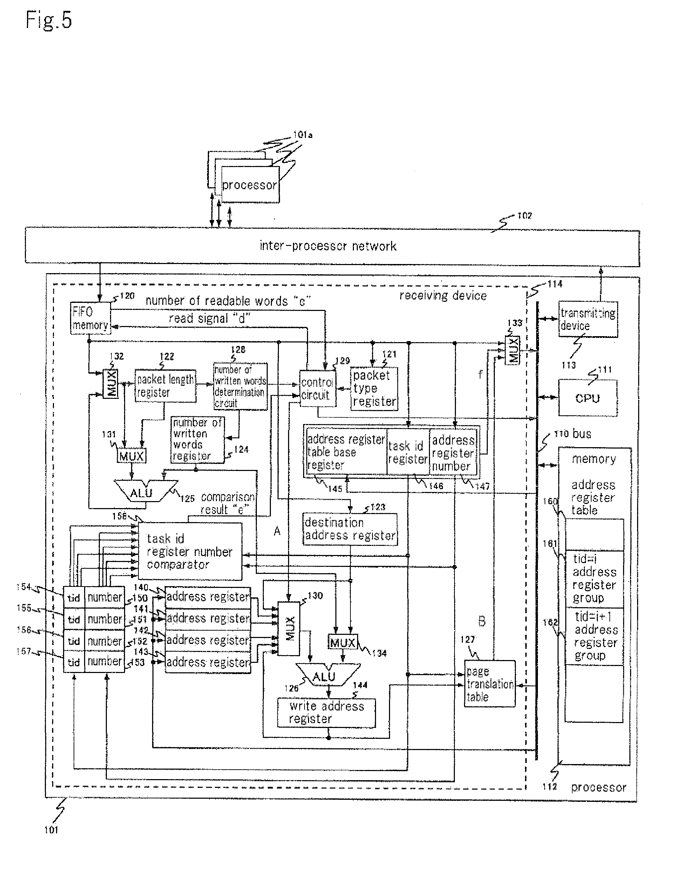

FIG. 5 is a block diagram showing the parallel computer processor of the second exemplary embodiment of the present invention. Constituent elements in FIG. 5 that are identical to elements in FIG. 2 are given the same numbers as in FIG. 2 and explanation of these parts is here omitted.

The second exemplary embodiment differs from the first exemplary embodiment in that there is a plurality of user tasks simultaneously executed in one processor 101 and address register table 160 having a plurality of address registers for each task is realized in memory 112.

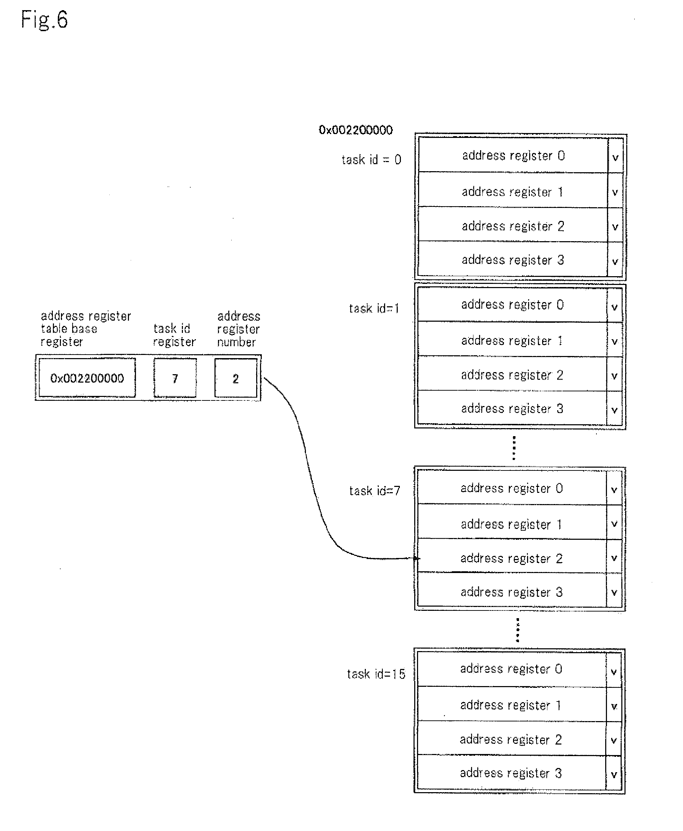

FIG. 6 is an explanatory view showing an example of address register table 160 in memory 112 shown in FIG. 5.

A case is shown in this example in which there are four address registers for each task. In addition, a case is shown in which the task id is four bits and the task id indicates any of 0-15. Other values may be taken as the number of tasks and the number of address registers for each task.

Address register table 160 shown in FIG. 6 is an example in which 0x002200000 is set in address register table base register 145, 7 is set in task id register 146, and 2 is set in address register number register 147.

In this case, the address register that is given the number set in address register number register 147 is used as the multicast holding unit that corresponds to the task set in task id register 146. The multicast holding unit can also typically be referred to as holding means.

The least significant bit of each address register is valid bit (v) indicating whether a valid value is entered in that address register.

When the valid bit of an address register that is read is "0," the value is invalid and therefore processed as an error.

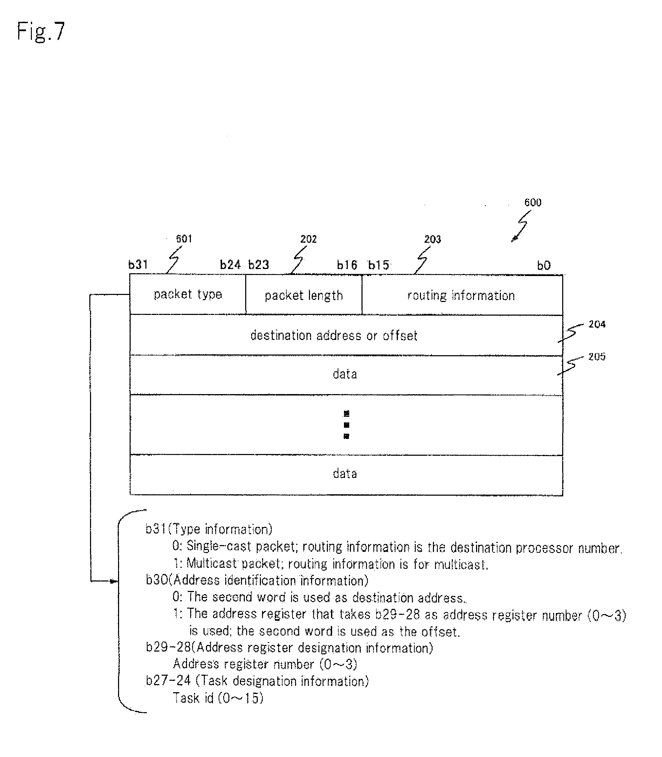

FIG. 7 is an explanatory view showing an example of the packet format that is used in the second exemplary embodiment. Elements in FIG. 7 that are identical to elements shown in FIG. 3 are given the same reference numbers.

Packet 600 shown in FIG. 7 can be used as a multicast packet, and further, can also be used as a single-cast packet. The first word and second word of packet 600 are used as the packet header.

Packet type 601 indicates one bit of type information, one bit of address identification information, two bits of address register designation information, and four bits of task designation information. In addition, designation information is made up from address register designation information and task designation information. The one bit of type information indicates whether packet 600 is a single-cast packet or a multicast packet. The one bit of address identification information indicates whether the information of the second word of the packet is a destination address or offset. The two bits of address register designation information indicate the number of the address register in address register table 160.

The four bits of task designation information indicate task id.

The packet format is otherwise identical to the packet format of FIG. 2 of the first exemplary embodiment.

Returning to FIG. 5, address registers 140-143 are included in receiving device 114 for caching address registers in memory 112.

As necessary, the start address in an address register is read from address register table 160 in memory 112 and stored in address registers 140-143.

In addition, receiving device 114 is further additionally provided with task id register 146 and address register number register 147.

Task id register 146 stores a task id that is added to a packet header.

Address register number register 147 stores the address register number that is added to a packet header.

In addition, receiving device 114 is additionally provided with address register table base register 145.

Address register table base register 145 stores the start address of address register table 160 in memory 112.

Using the values of address register table base register 145, task id register 146, and address register number register 147, memory address "f' is generated for reading the value in an address register from address register table 160 in memory 112.

In addition, task id registers 154-157 and address register number registers 150-153 are provided corresponding to address registers 140-143 for determining whether the address register that is designated by an address register number and the task id designated in a packet are cached in address registers 140-143.

Task id register number comparator 158 then compares the values of task id registers 154-157 and address register number registers 150-153 with the values of task id register 146 and address register number register 147 and sends the comparison result "e" to control circuit 129.

If, based on comparison result "e", there is a match, control circuit 129 uses MUX 130 to select the matching items from among address registers 140-143.

If there are no matches, control circuit 129 uses memory address "f" to read the values of address registers from address register table 160 in memory 112 and stores these values in one of address registers 140-143. Control circuit 129 then sets the values of task id register 146 and address register number register 147 to one of the corresponding task id registers 154-157 and one of address register number registers 150-153 respectively.

According to the present exemplary embodiment, each of a plurality of processors executes a plurality of tasks in parallel. An address register that is used as the multicast holding unit is provided for each task. Information for designating the address register that corresponds to a specific task among the plurality of tasks is then recorded in the multicast packet.

As a result, the address register that is used in a gather process can be selected for each task.

### Third Exemplary Embodiment

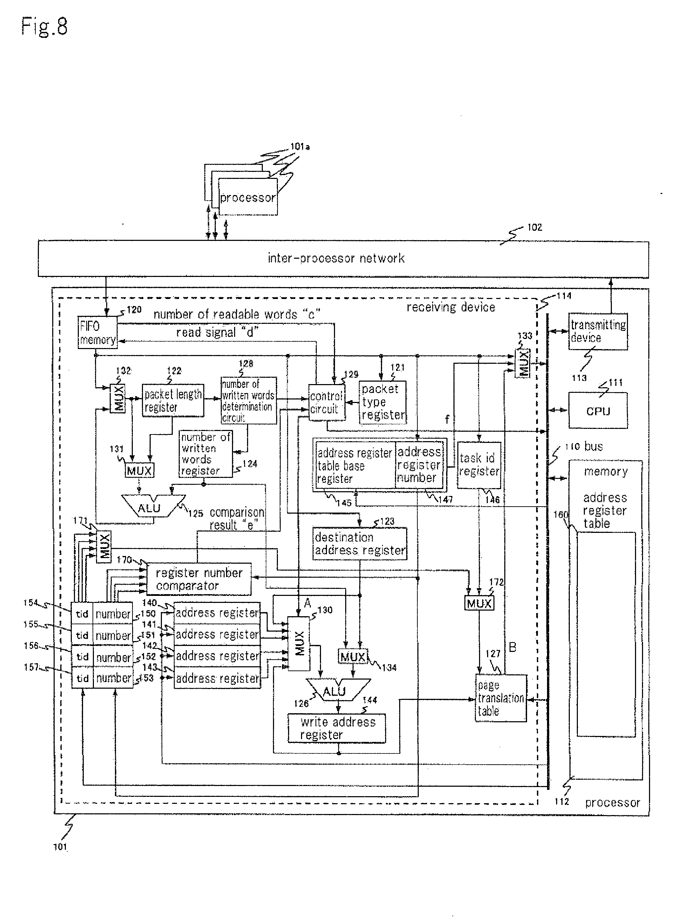

### FIG. 8 is a block diagram showing the parallel computer processor of the third exemplary embodiment of the present invention. Constituent elements in FIG. 8 that are identical to elements of FIG. 5 are given the same numbers as FIG. 5 and explanation of these elements is here omitted.

The third exemplary embodiment differs from the second exemplary embodiment in that, when an address register is used, the use of an address register in the address register table in memory 112 is designated without designating the task id in the packet.

Not designating the task id in a multicast packet in this way eliminates the limitation of the second exemplary embodiment in which the reception of the same multicast packet necessitates the same task id.

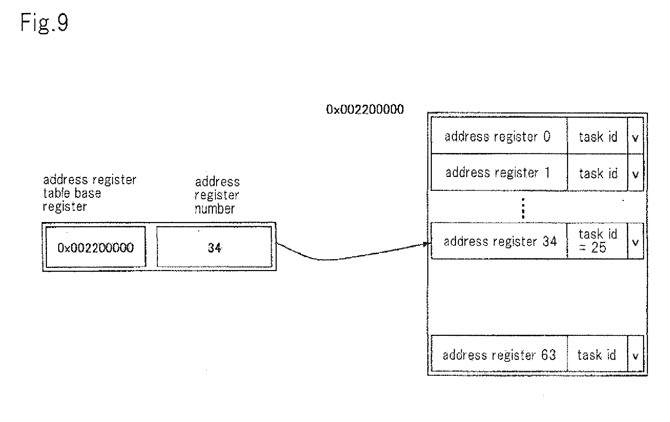

FIG. 9 is an explanatory view showing an example of address register table 160 in memory 112 shown in FIG. 8.

In this example, a case is shown in which there are 64 address registers. The number of address registers can be set to other values. In addition, each address register is placed in association with a task id. In addition, a case is shown in which 0x002200000 is set in address register table base register 145 shown in FIG. 8 and 34 is set in address register number register 147.

The least significant bit of each address register is a valid bit (v) indicating whether a valid value is entered in that address register. If the valid bit of an address register that has been read is "0," the value is invalid and is therefore processed as an error.

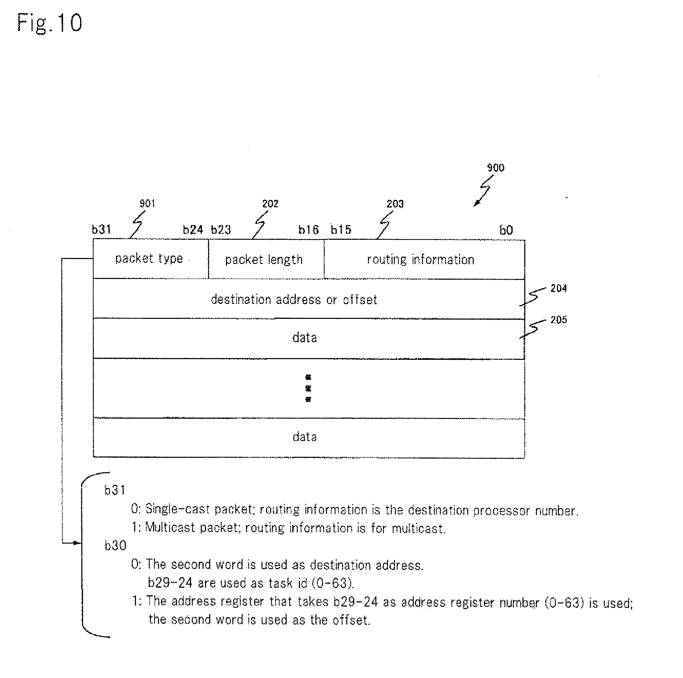

FIG. 10 is an explanatory view showing an example of the packet format used in the third exemplary embodiment. In FIG. 10, elements that are identical to elements shown in FIG. 3 are given the same numbers.

Packet 900 shown in FIG. 10 can be used as a multicast packet and can also be used as a single-cast packet. The first word and second word of packet 900 are used as a packet header.

Packet type 901 indicates one bit of type information and one bit of address identification information.

The one bit of type information indicates whether packet 900 is a single-cast packet or a multicast packet.

The one bit of address identification information indicates whether the information of the second word of the packet is the destination address or the offset.

The remaining six bits in packet type 901 indicate task id when the second word is used as the destination address and indicate the address register number when address registers are used in the receiving device. In addition, the remaining six bits in packet type 901 are an example of designation information.

The packet format is otherwise identical to the packet format of FIG. 7 of the second exemplary embodiment.

Returning to FIG. 8, receiving device 114 includes task id registers 154-157 and address registers 140-143 for caching the address registers in memory 112.

As necessary, address registers and task id are read from address register table 160 in memory 112 and stored in address registers 140-143 and task id registers 154-157.

In addition, task id register 146 is provided in receiving device 114.

Task id register 146 stores a task id that is added to the packet header when the second word of the packet is the destination address.

Receiving device 114 is further provided with address register number register 147.

Address register number register 147 stores the address register number that is added to the packet header in the case of a packet that uses an address register.

Receiving device 114 is further provided with address register table base register 145.

Address register table base register 145 stores the start address of address register table 160 in memory 112.

Using the values of address register table base register 145 and address register number register 147, memory address "f" is generated for reading the value in task id and the start address in the address register from address register table 160 in memory 112.

In addition, receiving device 114 is further provided with address register number registers 150-153 corresponding to address registers 140-143.

Address register number registers 150-153 are used for determining whether the address register designated by the address register number that was designated in a packet is cached in address registers 140-143.

Register number comparator then compares the values of address register number registers 150-153 with the value in address register number register 147 and sends the comparison result "e" to control circuit 129.

If, based on comparison result "e", there is matching, control circuit 129 uses MUX 130 and MUX 171 to select the matching items from among address registers 140-143 and task id registers 154-157.

If there is no matching, control circuit 129 reads the value in the address register and task id from the memory address "f" of address register table 160 in memory 112 and stores these in one of address registers 140-143 and in one of task id registers 154-157 respectively.

Control circuit 129 then sets the value in address register number register 147 to the one corresponding of address register number registers 150-153.

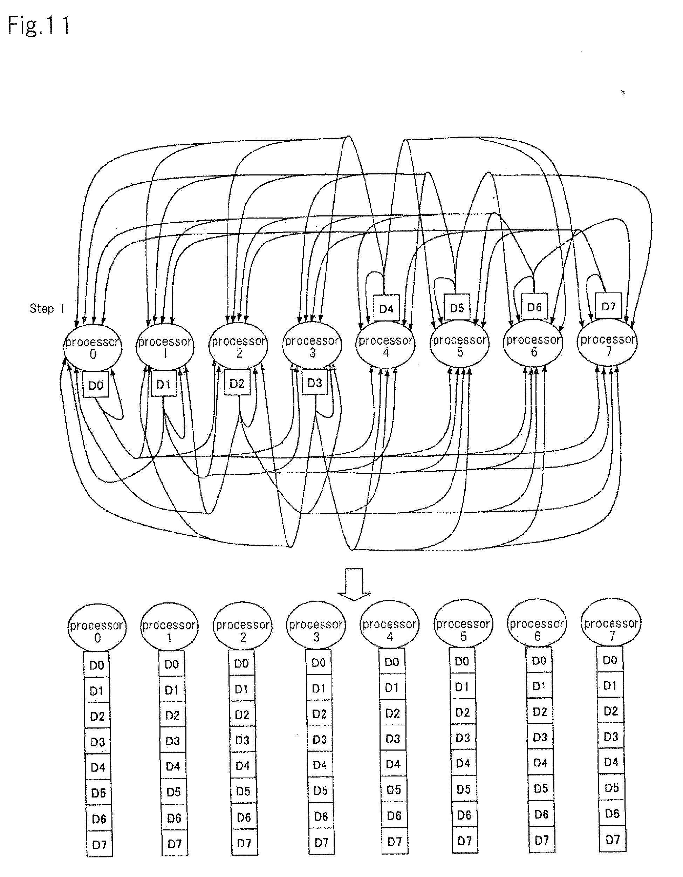

FIG. 11 is an explanatory view for explaining the operations when, using the processors of each of the above-described exemplary embodiments, the eight processors processor 0-processor 7 gather data D0-D7 by MPI_Allgather().

Each processor sends data in multicast packets to processors 0-7.

If the number of processors is P and if the data size that is gathered from each processor is N bytes, carrying out a single communication in one step in the processors of each of the above-described exemplary embodiments results in the transmission of N bytes of data by each processor and the reception of N × P bytes of data.

If the latency involved in a single communication is α and if the time expended in the communication of one byte (throughput) is β, the communication time is α + N × P × β.

Comparison with the Recursive Doubling of FIG. 1 shows a slight increase in the number of bytes that are transferred, but because this is realized in a single communication, the gather method of each of the above-described exemplary embodiments is more effective than the Recursive Doubling shown in FIG. 1 in the case of a large-scale system having a large network latency.

In addition, the efficiency of Recursive Doubling suffers when the number of processors is not a power of 2, or when there is variation in the data length that is transmitted by each processor as in MPI_Allgatherv(). In each of the above-described exemplary embodiments, efficiency does not suffer under such conditions.

In each of the exemplary embodiments described hereinabove, the configurations shown in the figures are merely examples and the present invention is not limited to these configurations.

### Potential Utility in Industry

Each of the above-described exemplary embodiments can be applied for such purposes as a processor for carrying out a gather process at high speed in large-scale parallel computers.

An exemplary advantage according to the present invention is the ability to reduce the processing time for collecting data from other processors that is taken up by the latency of the network. In addition, exemplary embodiments according to the present invention can prevent lengthening of the communication time for gathering data from other processors when the number of processors that participate in data collection is not a power of 2 or when the data size differs for each processor. Still further, the number of address registers used for collecting data from other processors can be reduced regardless of the number of participating processors.

While the invention has been particularly shown and described with reference to exemplary embodiments thereof, the invention is not limited to these exemplary embodiments. It will be understood by those of ordinary skill in the art that various changes in form and details may be made therein without departing from the spirit and scope of the present invention as defined by the claims.

Example 1 describes an inter-processor communication system that includes a plurality of processors and a transfer device that, upon receiving a multicast packet from any of said plurality of processors, transfers the multicast packet to a plurality of processors that are designated as the destinations in the multicast packet among said plurality of processors,
wherein said plurality of processors each comprises:
memory means;
holding means for holding position information that indicates a reference write position in said memory means;
transmitting means for transmitting to said transfer device multicast packets in which are recorded data and an adjustment value that indicates an area for writing data that has been set in advance for use by its own processor by using said reference write position as a reference; and
receiving means for, upon receiving said multicast packet that has been transmitted by way of said transfer device, determining a write position in said memory means based on the adjustment value recorded in the multicast packet and the position information in said holding means and storing data recorded in the multicast packet at that write position.

Example 2 describes the inter-processor communication system according to example 1, wherein said data are data to be stored in all of said plurality of processors.

Example 3 describes the inter-processor communication system according to example 1 or 2, wherein each of said plurality of processors further include control means for setting said position information in said holding means in advance.

Example 4 describes the inter-processor communication system according to any one of examples 1 to 3, wherein:
said transmitting means transmits to said transfer device a multicast packet in which designation information for designating said holding means, said data, and said adjustment value are recorded; and
said receiving means, upon receiving said multicast packet that was transmitted by way of said transfer device, determines said write position based on the adjustment value that is recorded in the multicast packet and the position information in the holding means that was designated by the designation information recorded in the multicast packet and stores data that are recorded in the multicast packet at the write position.

Example 5 describes the inter-processor communication system according to example 4, wherein:
each of said plurality of processors executes a plurality of tasks in parallel;
said holding means is provided for each of said tasks; and
said designation information designates said holding means that corresponds to a specific task among said plurality of tasks.

Example 6 describes a processor connected together with other processors to a transfer device including a multicast function for transmitting a multicast packet that has been received to a plurality of transmission destinations, said processor comprising:
memory means;
holding means for holding position information indicating a reference write position in said memory means;
transmitting means for transmitting to said transfer device a multicast packet in which are recorded data and an adjustment value indicating an area for writing data that has been set in advance for use by its own processor by using said reference write position as a reference;
receiving means for, upon receiving said multicast packet that has been transmitted by way of said transfer device, determining a write position in said memory means based on the adjustment value recorded in the multicast packet and the position information in said holding means and storing data that are recorded in the multicast packet in the write position.

Example 7 describes the processor according to example 6, wherein said data are data to be stored in all of said plurality of processors.

Example 8 describes an inter-processor communication method carried out by a inter-processor communication system that includes a plurality of processors each separately including holding means for holding position information indicating a reference write position in memory means in its own processor and a transfer device that is connected to said plurality of processors, said inter-processor communication method comprising:
transmitting from any one processor among said plurality of processors to said transfer device a multicast packet in which are recorded data and an adjustment value indicating an area for writing data that was set in advance for use by its own processor by using said reference write position as a reference;
upon receiving said multicast packet by way of said transfer device, transferring the multicast packet from said transfer device to a plurality of processors that are designated as destinations in the multicast packet among said plurality of processors; and
upon receiving said multicast packet by way of each of the plurality of processors that are designated as destinations in said multicast packet, determining a write position in said memory means based on the adjustment value that is recorded in the multicast packet and the position information in the holding means in its own processor and storing data that are recorded in the multicast packet in the write position by each of the plurality of processors that are designated as destinations in said multicast packet.

Example 9 describes the inter-processor communication method according to example 8, wherein said data are data that are to be stored in all of said plurality of processors.

Example 10 describes the inter-processor communication method according to example 8 or 9, wherein each of said plurality of processors further sets said position information in said holding means in advance.

Example 11 describes the inter-processor communication method according to any one of examples 8 to 10, wherein:
said transmitting further includes transmitting to said transfer device a multicast packet in which are recorded designation information for designating said holding means, said data, and said adjustment value; and
said storing further includes, upon reception of said multicast packet from said transfer device, determining said write position based on the adjustment value recorded in the multicast packet and the position information in the holding means that is designated in designation information recorded in the multicast packet and storing data that are recorded in the multicast packet in that write position.

Example 12 describes the inter-processor communication method according to example 11, wherein:
each of said plurality of processors executes a plurality of tasks in parallel;
said holding means is provided for each said task; and
said designation information designates said holding means that corresponds to a specific task among said plurality of tasks.

Example 13 describes a communication method carried out by a processor that is connected together with other processors to a transfer device having a multicast function for transmitting a multicast packet that has been received to a plurality of transmission destinations, said communication method comprising:
holding in holding means position information that indicates a reference write position in memory means;
transmitting to said transfer device a multicast packet in which are recorded data and an adjustment value that indicates an area for writing data that has been set in advance for use by its own processor by using said reference write position as a reference; and
upon receiving said multicast packet that has been transmitted by way of said transfer device, determining a write position in said memory means based on the adjustment value that is recorded in the multicast packet and the position information in said holding means and storing data that are recorded in the multicast packet in that write position.

Example 14 describes the communication method according to claim 13, wherein said data are data that are to be stored in all of said plurality of processors.

## Claims

1. An inter-processor communication system that includes a plurality of processors and a transfer device that, upon receiving a multicast packet from any of said plurality of processors, transfers the multicast packet to a plurality of processors that are designated as the destinations in the multicast packet among said plurality of processors, wherein said plurality of processors each comprises:
memory means;
holding means for holding position information that indicates a reference write position in said memory means;
transmitting means for transmitting to said transfer device multicast packets in which are recorded data and an adjustment value that indicates an area for writing data that has been set in advance for use by its own processor by using said reference write position as a reference; and
receiving means for, upon receiving said multicast packet that has been transmitted by way of said transfer device, determining a write position in said memory means based on the adjustment value recorded in the multicast packet and the position information in said holding means and storing data recorded in the multicast packet at that write position.

2. The inter-processor communication system according to claim 1, wherein said data are data to be stored in all of said plurality of processors.

3. The inter-processor communication system according to claim 1 or 2, wherein each of said plurality of processors further includes control means for setting said position information in said holding means in advance.

4. The inter-processor communication system according to any one of claims 1 to 3, wherein:
said transmitting means transmits to said transfer device a multicast packet in which designation information for designating said holding means, said data, and said adjustment value are recorded; and
said receiving means, upon receiving said multicast packet that was transmitted by way of said transfer device, determines said write position based on the adjustment value that is recorded in the multicast packet and the position information in the holding means that was designated by the designation information recorded in the multicast packet and stores data that are recorded in the multicast packet at the write position.

5. The inter-processor communication system according to claim 4, wherein:
each of said plurality of processors executes a plurality of tasks in parallel;
said holding means is provided for each of said tasks; and
said designation information designates said holding means that corresponds to a specific task among said plurality of tasks.

6. A processor connected together with other processors to a transfer device including a multicast function for transmitting a multicast packet that has been received to a plurality of transmission destinations, said processor comprising:
memory means;
holding means for holding position information indicating a reference write position in said memory means;
transmitting means for transmitting to said transfer device a multicast packet in which are recorded data and an adjustment value indicating an area for writing data that has been set in advance for use by its own processor by using said reference write position as a reference;
receiving means for, upon receiving said multicast packet that has been transmitted by way of said transfer device, determining a write position in said memory means based on the adjustment value recorded in the multicast packet and the position information in said holding means and storing data that are recorded in the multicast packet in the write position.

7. The processor according to claim 6, wherein said data are data to be stored in all of said plurality of processors.

8. An inter-processor communication method carried out by a inter-processor communication system that includes a plurality of processors each separately including holding means for holding position information indicating a reference write position in memory means in its own processor and a transfer device that is connected to said plurality of processors, said inter-processor communication method comprising:
transmitting from any one processor among said plurality of processors to said transfer device a multicast packet in which are recorded data and an adjustment value indicating an area for writing data that was set in advance for use by its own processor by using said reference write position as a reference;
upon receiving said multicast packet by way of said transfer device, transferring the multicast packet from said transfer device to a plurality of processors that are designated as destinations in the multicast packet among said plurality of processors; and
upon receiving said multicast packet by way of each of the plurality of processors that are designated as destinations in said multicast packet, determining a write position in said memory means based on the adjustment value that is recorded in the multicast packet and the position information in the holding means in its own processor and storing data that are recorded in the multicast packet in the write position by each of the plurality of processors that are designated as destinations in said multicast packet.

9. The inter-processor communication method according to claims 8, wherein said data are data that are to be stored in all of said plurality of processors.

10. The inter-processor communication method according to claim 8 or 9, wherein each of said plurality of processors further sets said position information in said holding means in advance.

11. The inter-processor communication method according to any one of claims 8 to 10, wherein:
said transmitting further includes transmitting to said transfer device a multicast packet in which are recorded designation information for designating said holding means, said data, and said adjustment value; and
said storing further includes, upon reception of said multicast packet from said transfer device, determining said write position based on the adjustment value recorded in the multicast packet and the position information in the holding means that is designated in designation information recorded in the multicast packet and storing data that are recorded in the multicast packet in that write position.

12. The inter-processor communication method according to claim 11, wherein:
each of said plurality of processors executes a plurality of tasks in parallel;
said holding means is provided for each said task; and
said designation information designates said holding means that corresponds to a specific task among said plurality of tasks.

13. A communication method carried out by a processor that is connected together with other processors to a transfer device including a multicast function for transmitting a multicast packet that has been received to a plurality of transmission destinations, said communication method comprising:
holding in holding means position information that indicates a reference write position in memory means;
transmitting to said transfer device a multicast packet in which are recorded data and an adjustment value that indicates an area for writing data that has been set in advance for use by its own processor by using said reference write position as a reference; and
upon receiving said multicast packet that has been transmitted by way of said transfer device, determining a write position in said memory means based on the adjustment value that is recorded in the multicast packet and the position information in said holding means and storing data that are recorded in the multicast packet in that write position.

14. The communication method according to claim 13, wherein said data are data that are to be stored in all of said plurality of processors.
